(19) Europäisches Patentamt
European Patent Office
Office européen des brevets

(11) Veröffentlichungsnummer: **0 144 701**
**B1**

(12) # EUROPÄISCHE PATENTSCHRIFT

(45) Veröffentlichungstag der Patentschrift: **16.03.88**

(51) Int. Cl.⁴: **C 07 C 147/12**, C 09 B 62/503

(21) Anmeldenummer: **84112999.2**

(22) Anmeldetag: **29.10.84**

(54) **Verfahren zur Herstellung von 2-Amino-l-hydroxy-4- oder -5-(beta-sulfatoäthylsulfonyl)-benzol-Verbindungen und deren Verwendung zur Synthese von faserreaktiven Verbindungen.**

(30) Priorität: **05.11.83 DE 3340114**

(43) Veröffentlichungstag der Anmeldung: **19.06.85 Patentblatt 85/25**

(45) Bekanntmachung des Hinweises auf die Patenterteilung: **16.03.88 Patentblatt 88/11**

(84) Benannte Vertragsstaaten: **CH DE FR GB IT LI**

(56) Entgegenhaltungen:
**EP-A-0 035 956**
**FR-A-2 360 539**
**FR-A-2 360 571**

(73) Patentinhaber: **HOECHST AKTIENGESELLSCHAFT, Postfach 80 03 20, D-6230 Frankfurt am Main 80 (DE)**

(72) Erfinder: **Hoyer, Ernst, Dr., Eptingweg 3, D-6230 Frankfurt am Main 80 (DE)**
Erfinder: **Meininger, Fritz, Dr., Loreleistrasse 7, D-6230 Frankfurt am Main 80 (DE)**
Erfinder: **Steuernagel, Hans Helmut, Dr., An den Römergärten 1, D-6233 Kelkheim (Taunus) (DE)**

EP 0 144 701 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung liegt auf dem technischen Gebiet der Veresterung von Zwischenprodukten, die insbesondere für die Farbstoffsynthese geeignet sind.

Es ist bekannt, o-Aminophenol-Verbindungen, die eine β-Hydroxyäthylsulfonyl-Gruppe besitzen, durch Sulfatierungsmittel in ihre Schwefelsäurehalbester-Verbindungen (β-Sulfatoäthylsulfonyl-aminophenol-Verbindungen) überzuführen. Diese β-Sulfatoäthylsulfonyl-aminophenole dienen als Ausgangsverbindungen zur Herstellung von faserreaktiven, faserveredelnden Verbindungen (vgl. hierzu auch US-PS-2 670 265), wie faserreaktiven Farbstoffen, die eine oder mehrere dieser β-Sulfatoäthylsulfonyl-Gruppen enthalten. So lassen sich insbesondere mit diesen β-Sulfatoäthylsulfonyl-aminophenolen in an und für sich bekannten Verfahrensweisen, die zahlreich in der Literatur beschrieben sind, faserreaktive Azofarbstoffe und deren Metallkomplexverbindungen oder Metallkomplexformazan-Farbstoffe synthetisieren.

Die bekannten Verfahren zur Herstellung dieser Schwefelsäurehalbester zeigen jedoch gewisse Mängel oder Nachteile, die eine weitere Verbesserung notwendig erscheinen ließen.

So ist beispielsweise aus den deutschen Patentschriften 938 145 und 953 103, aus den US-Patentschriften 3 135 730 und 3 364 194 sowie aus den britischen Patentschriften 831 128 und 1 075 074 bekannt, β-Hydroxyäthylsulfonyl-aminophenole mit der 6-fach molaren Menge an konzentrierter (d. h. 90 - 95 gew.-%-iger) Schwefelsäure, somit mit einem Überschuß von 500 % an Veresterungsmittel, in die entsprechenden β-Sulfatoäthylsulfonyl-aminophenole zu verestern. Bei der Anwendung dieses Überschusses an Veresterungsmittel stellt das Reaktionsmedium zwar eine Lösung dar, so daß die Veresterungsreaktion in üblichen Rührgefäßen, wie sie in chemischen Laboratorien und Betrieben allgemein gebräuchlich sind und zur Verfügung stehen, verhältnismäßig problemlos durchgeführt werden kann; unbefriedigend und nachteilig hierbei ist jedoch die Aufarbeitung des relativ hohen Überschusses an Veresterungsmittel, wie beispielsweise durch Ausfällung als Calciumsulfat (Gips), das deponiert werden muß, sofern das Veresterungsmittel nicht in Form von löslichen Salzen (Natriumsulfat) in das Abwasser gelangen soll. Desweiteren wird bei dieser Methode der Veresterung in 500 %-igem Überschuß an konzentrierter Schwefelsäure keine voll befriedigende Sulfatierung der β-Hydroxyäthylsulfonyl-Gruppe erzielt. Quantitative Untersuchungen mit Hilfe der Dünnschichtchromatographie (DC) und der Hochdruck-Flüssigkeitschromatographie (HPLC) zeigen nämlich, daß die Ausgangs-β-Hydroxyäthylsulfonylaminophenole zu 10 % und darüber unverestert bleiben. Der Veresterungsgrad dieser Verfahrensweise beträgt somit höchstens 90 % der Theorie, so daß die an und für sich bekannte Weiterverarbeitung der β-Sulfatoäthylsulfonyl-aminophenole zu entsprechenden faserreaktiven Verbindungen, wie Farbstoffen, zu Endprodukten führt, die 10 % und mehr an nicht faserreaktivem Endprodukt (im nachfolgenden der Einfachheit halber Farbstoff genannt) enthalten. Dieser inaktive (Farbstoff-)Anteil kann nicht in die Reaktion mit der Faser eingehen, so daß er auf der Faser nicht fixiert wird und ins Abwasser gelangt.

Des weiteren ist aus dem Beispiel 2 der US-Patentschrift 3 414 579 bekannt, 2-Amino-1-hydroxy-4-(β-hydroxyäthylsulfonyl)-benzol mit der 3,6-fach molaren Menge an Amidosulfonsäure in Pyridin als Lösemittel in die entsprechende Sulfatoverbindung überzuführen. Dies bedeutet zwar im Vergleich zu den zuvor beschriebenen Verfahren eine deutliche Verminderung des Überschusses an Veresterungsmittel, jedoch muß das Pyridin wieder aus dem Reaktionsansatz entfernt werden, beispielsweise durch Destillation unter vermindertem Druck. Eine vollständige Entfernung des Pyridins ist allerdings nicht möglich, und es gelangt bei der Weiterverarbeitung der hergestellten Schwefelsäurehalbesterverbindung zu einem faserreaktiven Endprodukt (Farbstoff) in die Mutterlauge des Reaktionsansatzes. Hieraus das Pyridin zu entfernen ist jedoch unbedingt erforderlich, ehe die Abwässer in die Kanalisation gelangen dürfen.

Eine noch weitergehende Senkung des Überschusses an Veresterungsmittel bei der Sulfatisierung von β-Hydroxyäthylsulfonyl-aminophenolen ist gemäß der Verfahrensweise der FR-A-2 360 539 und FR-A-2 360 571 möglich; hier wird ein Überschuß an Veresterungsmittel von bis zu 150 % eingesetzt. Das Arbeiten mit solch einem geringen Überschuß ist allerdings nur mit Hilfe von Maschinen möglich, die mit Knetwirkung arbeiten. Der Hinsatz von Knetern bedeutet allerdings nicht nur technisch eine sehr aufwendige Arbeitsweise, sondern stellt auch eine spezielle kostspielige Investition für einen Betrieb dar, da solche Kneter im Vergleich zu den üblichen in der Chemietechnik verwendeten Rührgefäßen (Rührkesseln) allgemein im Laboratorium oder Betrieb nicht zur Verfügung stehen. Die Anwendbarkeit dieses Verfahrens ist deshalb von in chemischen Betrieben allgemein nicht zur Verfügung stehenden Knetern abhängig und somit begrenzt.

Nachteile zeigen sich bei der Verwendung an Sulfatierungsmitteln im Überschuß jedoch nicht nur in der Aufarbeitung des überschüssigen Veresterungsmittels, sondern auch unter Umständen bei der Reaktion selbst, sofern die Sulfatierung mittels 100 %-iger Schwefelsäure oder Schwefeltrioxid enthaltender Schwefelsäure bei Temperaturen oberhalb 120°C durchgeführt wird. In diesem Fall erfolgt nicht nur Veresterung (Sulfatierung) der β-Hydroxyäthylsulfonyl-Gruppe, sondern auch Sulfierung des Benzolkernes, d. h. zusätzlich Einführung einer Sulfogruppe (s. britische Patentschrift 1 372 368, Seite 2, Zeile 41 ff., und Beispiel 1).

Darüberhinaus hat man versucht, die Sulfatierung von β-Hydroxyäthylsulfonylaminophenolen unter Einsatz von nur geringen Überschüssen an Veresterungsmittel (Chlorsulfonsäure oder Schwefeltrioxid) durch Arbeiten in N-Methyl-pyrrolidon als Lösemittel zu verbessern. Allerdings hat auch dieses Verfahren den großen Nachteil, daß eine nachträgliche Extraktion des Lösemittels mit Hilfe von chlorierten Kohlenwasserstoffen, wie Methylenchlorid oder Chloroform, erforderlich ist, was einen erheblichen Aufwand an sicherheitstechnischen Vorkehrungen bedingt.

Es bestand somit ein technisches Interesse und die Aufgabe, ein Verfahren zur Sulfatierung von β-Hydroxyäthylsulfonyl-aminophenolen zu finden, das ohne Zusatz eines organischen Lösemittels und ebenso ohne die Notwendigkeit des Einsatzes von Knetern (die bei nicht rührfähigen Ansätzen erforderlich werden) in üblichen und gängigen, in chemischen Laboratorien und Betrieben üblicherweise zur Verfügung stehenden Rührgefäßen (Rührkesseln) mit möglichst geringen Mengen en Veresterungsmitteln und trotzdem mit einem hohen Veresterungsgrad ohne zusätzliche Sulfierungsreaktion durchgeführt werden kann.

Einleitende Arbeiten hierzu haben gezeigt, daß, wenn man gemäß dem Stand der Technik mit konzentrierter Schwefelsäure als Veresterungsmittel und gleichzeitig als Lösemittel arbeitet, eine Verringerung des Veresterungsmittels unterhalb der 6-fach molaren Menge zu einer Erniedrigung des Veresterungsgrades führt.

Mit der vorliegenden Erfindung wurde nun ein Verfahren gefunden, mit dem β-Hydroxyäthylsulfonyl-aminophenole in überraschender Weise mit äußerst hohem Veresterungsgrad (97 % und höher) und ohne merkliche Sulfierung unter Verwendung von geringen Überschüssen an Sulfatierungsmitteln in deren Schwefelsäurehalbesterverbindungen übergeführt werden können.

Die vorliegende Erfindung betrifft somit ein Verfahren zur Herstellung von β-Sulfatoäthylsulfonyl-aminophenol-Verbindungen der allgemeinen Formel (1) durch Umsetzung von β-Hydroxyäthylsulfonyl-aminophenol-Verbindungen der allgemeinen Formel (2)

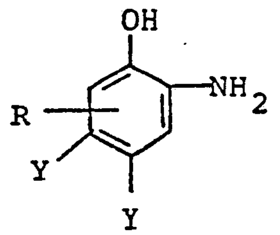

(1)

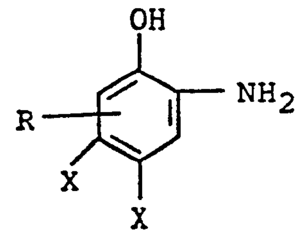

(2)

in welchen das eine Y die β-Sulfatoäthylsulfonyl-Gruppe der Formel $-SO_2-CH_2-CH_2-OSO_3H$ und das andere Y ein Wasserstoffatom darstellt, das eine X eine β-Hydroxyäthylsulfonyl-Gruppe der Formel $-SO_2-CH_2-CH_2-OH$ und das andere X ein Wasserstoffatom bedeutet sowie R für ein Wasserstoffatom oder eine Alkylgruppe von 1 bis 4 C-Atomen oder eine Alkoxygruppe die Nitrogruppe steht, mit einem Schwefelsäure/Schwefeltrioxid-Gemisch als Sulfatierungsmittel, das dadurch gekennzeichnet ist, daß man die Sulfatierung unter Verwendung eines Sulfatierungsgemisches, das anteilig aus der 1,5-fach bis 4-fach molaren Menge an 100 %-iger Schwefelsäure und der 0,9-fach bis 1,1-fach molare Menge an Schwefeltrioxid, bezogen auf Mol Ausgangsverbindung (2), besteht, und ohne ein weiteres Lösemittel durchführt und daß die Umsetzung in gewöhnlichen Rührgefäßen, die keine Knetwirkung bewirken, bei einer Temperatur zwischen 0°C und 120°C, bevorzugt zwischen 40 und 100°C, erfolgt und daß man hierbei innerhalb dieses Temperaturbereiches die Temperatur so hoch hält, daß das Reaktionsgemisch ausreichend dünnflüssig und somit rührfähig bleibt.

Durch den Verbrauch an Sulfatierungsmittel und somit auch an Lösemittel bei der Sulfatierungsreaktion des erfindungsgemäßen Verfahrens ändert sich die Konsistenz des Reaktionsmediums unter Erhöhung der Viskosität und gegebenenfalls unter Ausfällung von Feststoffen, wie dem Endprodukt (1), die sich im Reaktionsmedium nicht mehr gelöst halten. Dem kann durch Erhöhung der Reaktionstemperatur entgegengewirkt werden, wobei es dienlich ist, die Reaktionstemperatur nur so hoch zu halten, wie es zur Rührfähigkeit des Reaktionsmediums erforderlich ist. Dies läßt sich, gegebenenfalls in Vorversuchen, abhängig von der Wahl der Ausgangs-Aminophenolverbindung und der Menge an Veresterungsmittel, leicht ermitteln und - auch in großen technischen Ansätzen - leicht kontrollieren. In der Regel ist eine höhere Reaktionstemperatur erforderlich, wenn man eine geringere Schwefelsäuremenge im erfindungsgemäß angegebenen Bereich zwischen 1,5 bis 4 Mol pro Mol Ausgangsaminophenol einsetzt.

Bevorzugt verwendet man ein Sulfatierungsgemisch aus Schwefelsäure und Schwefeltrioxid, das anteilig die 2-fach bis 3-fach molare Menge an 100 %-iger Schwefelsäure und/oder die 0,95-fach bis 1,1-fach molare Menge an Schwefeltrioxid, jeweils bezogen auf Mol Ausgangsaminophenol (2), enthält. In der Regel ist der Anteil an 100 %-iger Schwefelsäure innerhalb der angegebenen erfindungsgemäßen Grenzen zu erhöhen, falls eine niedrigere Menge an Schwefeltrioxid, wie beispielsweise die untere Menge von 0,9 Mol Schwefeltrioxid pro Mol Aminophenol (2), als Sulfatierungsmittelgemisch eingesetzt wird, um einen genügend hohen Veresterungsgrad zu gewährleisten.

Es ist im wesentlichen unerheblich, in welcher Weise die Reaktionskomponenten (Ausgangsaminophenol der Formel (2), Schwefelsäure und Schwefeltrioxid oder Oleum) miteinander vereinigt werden. So kann man das Sulfatierungsgemisch der erfindungsgemäß definierten Zusammensetzung zuvor aus wasserhaltiger Schwefelsäure, beispielsweise mit einem Wassergehalt bis zu 10 Gew.-%, die in der Regel technisch zugänglich ist, und Schwefeltrioxid herstellen und dieses Sulfatierunsgemisch mit der Aminophenolverbindung (2) vereinigen. Man kann jedoch auch die Aminophenolverbindung (2) zuvor in wasserhaltiger Schwefelsäure oder 100 %-iger Schwefelsäure lösen und die entsprechende Menge an Schwefeltrioxid oder höherkonzentriertem Oleum zur entsprechenden Hinstellung der Sulfatierungsgemischzusammensetzung zusetzen oder das Aminophenol (2) mit Oleum entsprechender Zusammensetzung vereinigen, um sodann die

eigentliche Sulfatierungsreaktion durchzuführen. Gibt man das Aminophenol (2) zunächst nur mit 100 %-iger Schwefelsäure oder mit wasserhaltiger Schwefelsäure von beispielsweise über 90 Gew.-% zusammen, so erfolgt zwar bereits in beträchtlichem Umfange die Sulfatierungsreaktion; zur Erreichung des angestrebten sehr hohen Veresterungsgrades ist jedoch der Zusatz des erfindungsgemäß angegebenen Anteiles an Schwefeltrioxid unbedingt erforderlich.

Das erfindungsgemäße Verfahren kann beispielsweise in einer technisch günstigen Ausführungsform in der Weise durchgeführt werden, daß man in dem Rührgefäß (Rührkessel) eine Mischung aus Schwefelsäure und Schwefeltrioxid der angegebenen Zusammensetzung vorlegt und die Ausgangsverbindung (2) einträgt und hierbei das Reaktionsgemisch mittels der freiwerdenden Reaktionswärme, gegebenenfalls durch zusätzliche äußere Wärmezufuhr, sich innerhalb des angegebenen Temperaturbereiches erwärmen läßt bzw. dessen Temperatur steigert, und zwar nur insoweit, als die Konsistenz des Reaktionsgemisches genügend dünnflüssig bleibt, damit in normalen Rührgefäßen eine hinreichende Rührung und Durchmischung erfolgen kann.

β-Hydroxyäthylsulfonyl-aminophenol-Verbindungen der allgemeinen Formel (2), die als Ausgangsverbindungen im erfindungsgemäßen Verfahren dienen, sind beispielsweise 2-Amino-1-hydroxy-4-(β-hydroxyäthylsulfonyl)-benzol, 2-Amino-1-hydroxy-5-(β-hydroxyäthylsulfonyl)-benzol, 2-Amino-1-hydroxy-4-methyl-5-(β-hydroxyäthylsulfonyl)-benzol, 2-Amino-1-hydroxy-4-methoxy-5-(β-hydroxyäthylsulfonyl)-benzol, 6-Chlor-2-amino-1-hydroxy-4-(β-hydroxyäthylsulfonyl)-benzol, 6-Brom-2-amino-1-hydroxy-4-(β-hydroxyäthylsulfonyl)-benzol, 2-Amino-1-hydroxy-5-methoxy-4-(β-hydroxyäthylsulfonyl)-benzol und 6-Nitro-2-amino-1-hydroxy-4-(β-hydroxyäthylsulfonyl)-benzol.

Die Aufarbeitung des Reaktionsgemisches nach der Veresterung kann in an und für sich üblicher und dem Fachmann geläufiger und bekannter Weise erfolgen. So wird beispielsweise das Reaktionsgemisch mit Eis und Wasser bei niedriger Temperatur verdünnt und mittels einer üblichen basischen Alkalimetallverbindung, wie beispielsweise Natriumbicarbonat oder Natriumcarbonat oder der entsprechenden Kaliumverbindung, neutralisiert. Die neutrale oder ganz schwach saure Lösung wird sodann zur Trockene eingedampft oder sprühgetrocknet. Man erhält so die Alkalimetallsalze der Verbindungen der allgemeinen Formel (1) im Gemisch mit dem Alkalimetallsulfat, wie beispielsweise Natriumsulfat.

Eine weitere Möglichkeit der Aufarbeitung des Reaktionsgemisches nach der Veresterung besteht darin, daß man es nach dem Verdünnen mit Eis/Wasser mit Calciumcarbonat neutralisiert, das ausgefallene Calciumsulfat absaugt, dem Filtrat Oxalsäure und ein basisches Alkalimetallsalz, wie Alkalibicarbonat oder -carbonat, zugibt, um es im schwach sauren Bereich von Calciumionen zu befreien, den Calciumoxalat-Niederschlag abtrennt, beispielsweise durch Filtrieren oder Zentrifugieren, und das Filtrat anschließend zur Trockene eindampft oder sprühtrocknet. Auf diese Weise erhält man die Alkalimetallsalze der Verbindungen (2) frei von Alkalimetallsulfaten.

Die so erhaltenen β-Sulfatoäthylsulfonyl-aminophenol-Verbindungen der allgemeinen Formel (1) können anschließend in vorteilhafter Weise als Ausgangsprodukte zur Herstellung von farbstarken Farbstoffprodukten, die praktisch keinen faser-inaktiven Farbstoffanteil aufweisen, weiterverarbeitet werden.

Vorteilhaft jedoch ist es, statt die erfindungsgemäß hergestellten Verbindungen der allgemeinen Formel (1) zunächst zu isolieren, diese direkt in ihrem Reaktionsansatz der Synthese von faserreaktiven Endprodukten (Farbstoffen) zuzuführen. Da die Verbindungen der allgemeinen Formel (1) beispielsweise als Diazokomponenten zur Herstellung von Azofarbstoffen bzw. deren Metallkomplexverbindungen dienen können, läßt sich der Syntheseansatz nach Beendigung der Veresterungsreaktion direkt - nach vorherigem Verdünnen mit Eis/Wasser - ohne weiteren Säurezusatz in die Diazotierungsreaktion einsetzen. So dient der mit Eis/Wasser verdünnte Veresterungsansatz zugleich als Reaktionsmedium sowohl für die in an und für sich üblicher Weise ausgeführte Diazotierungsreaktion mit einem Alkalimetallnitrit als auch für die sich daran anschließende Kupplungsreaktion mit einer Kupplungskomponente nach (teilweiser) Neutralisation der Säure zu einem pH-Bereich, in dem die Kupplung üblicherweise durchgeführt wird. Im gleichen Reaktionsmedium können zur Synthese der Metallkomplexverbindungen, die in an und für sich üblicher und in der Literatur vielfach beschriebener Verfahrensweise durchgeführt werden kann, die hierfür üblichen metallabgebenden Verbindungen zugesetzt werden. Diese direkte Verwendung des Veresterungsansatzes als "Diazokomponente" ist nicht nur vorteilhaft bei der Herstellung von Metallkomplexformazanverbindungen, wie insbesondere Kupferkomplexformazanverbindungen (-Farbstoffen), sondern insbesondere auch vorteilhaft bei der Herstellung von 1:1-Kupfer-, 1:2-Kobalt- und 1:2-Chromkomplex-Azoverbindungen (Metallkomplexfarbstoffen) bzw. deren metallfreien Azoverbindungen.

Die direkte Verwendung des Veresterungsansatzes hat nicht nur den Vorteil, Arbeitsschritte bei der Isolierung der Sulfatoverbindung der allgemeinen Formel (1) und hierfür erforderliche Chemikalien (säurebindende Mittel) einzusparen, sondern hat auch insbesondere bei der Herstellung der Farbstöffe den großen Vorteil, daß die Farbstoffe selbst leicht durch Eindampfen oder Sprühtrocknung der neutralen oder schwach sauren Farbstofflösung abwasserfrei isoliert werden können, da der Elektrolytanteil sehr gering ist, so daß eine Ausfällung (Aussalzen) der Farbstoffe mittels Natriumchlorid oder Kaliumchlorid, die zu salzhaltigen Abwassern führt, nicht erforderlich ist.

Da die aus der direkten Verwendung des Veresterungsgemisches erhältlichen Farbstofflösungen verhältnismäßig salzarm sind, besitzen die hergestellten Farbstoffprodukte in diesen Lösungen auch eine ausreichend gute Löslichkeit. Die nach der oben beschriebenen Methode hergestellten Farbstofflösungen können deshalb, gegebenenfalls nach Aufkonzentrieren durch teilweises Eindampfen, als konzentrierte, standardisierte Farbstofflösungen in den Handel gebracht werden, die als solche direkt, ohne daß der

pulverförmige Farbstoff selbst von dem Anwender (Färber) zunächst abgewogen und in Wasser gelöst werden muß, zur Herstellung der Färbebäder und Färbeflotten verwendet werden kann.

Die aus den erfindungsgemäß hergestellten Sulfatoverbindungen der allgemeinen Formel (1) erhältlichen Farbstoffe stellen wegen ihres sehr hohen Veresterungsgrades Farbstoffprodukte dar, die nur einen äußerst geringen Anteil an faserinaktivem Produkt (Farbstoff) aufweisen.

Die nachstehenden Beispiele dienen zur Erläuterung des Erfindungsgegenstandes. Teile stellen Gewichtsteile dar und Prozentangaben beziehen sich auf Gewichtsprozente, sofern nicht anders vermerkt. Gewichtsteile verhalten sich zu Volumenteilen wie Kilogramm zu Liter.

**Beispiel 1.**

In einem mit einem Rührer versehenen Rührgefäß (in der Technik bspw. ein Rührkessel; im Labor kann ein Dreihalskolben mit KPG-Rührer verwendet werden) werden in eine Mischung aus 61 Teilen 100 %-iger Schwefelsäure (Monohydrat) und 49,3 Teilen 65 %-igem Oleum innerhalb von 10 bis 15 Minuten 87 Teile 2-Amino-1-hydroxy-4-(β-hydroxyäthylsulfonyl)-benzol unter Rühren eingetragen, wobei man die Temperatur in der Reaktionsmischung von anfangs 20° C in Verlaufe des Eintragens allmählich so ansteigen läßt, daß sie nach beendetem Eintragen etwa 85° C beträgt. Nach dreistündigem Nachrühren bei 80 bis 85° C ist die Veresterung beendet.

Eine quantitative Analyse des Reaktionsgemisches läßt sich durch Dünnschichtchromatographie (DC) oder durch Hochdruck-Flüssigkeitschromatographie (HPLC) durchführen:

Das Veresterungsgemisch enthält 116 - 118 Teile 2-Amino-1-hydroxy-4-(β-sulfatoäthylsulfonyl)-benzol; der Veresterungsgrad ist mindestens 97 % d.Th.; der Anteil an nicht umgesetzten 2-Amino-1-hydroxy-4-(β-hydroxyäthylsulfonyl)-benzol und ebenso der Anteil an sulfiertem Produkt beträgt jeweils höchstens 1 %, bezogen auf die eingesetzte Menge an dieser Ausgangsverbindung.

**Beispiel 1a**

Das gemäß Beispiel 1 erhaltene Veresterungsgemisch mit der erfindungsgemäß hergestellten Sulfatoverbindung, die in der Schwefelsäure gelöst vorliegt, kann wie folgt aufgearbeitet werden:

**(a)** Das 80 bis 85° C heiße Veresterungsgemisch wird mit 800 Teilen Eis und Wasser zusammengegeben, wobei darauf geachtet wird, daß die Temperatur der entstehenden Mischung 10° C nicht übersteigt; zweckmäßigerweise läßt man die heiße Reaktionsmischung auf die kräftig gerührte Mischung aus Eis und Wasser fließen. Den an der Gefäßwand anhaftenden Rest des Veresterungsgemisches spült man mit Eis und Wasser aus.

**(b)** Die unter (a) erhaltene kalte, verdünnte Lösung des Reaktionsproduktes wird bei einer Temperatur von 20° C oder darunter unter Rühren durch Einstreuen von Natriumbicarbonat auf einen pH-Wert zwischen 5 und 6,5 eingestellt. Die anfallende Lösung wird, gegebenenfalls nach vorherigem Klären, beispielsweise mittels Kieselgur und Filtration, auf übliche Weise zur Trockene eingedampft, beispielsweise im Umluftschrank oder Vakuumschrank bei 50 bis 60° C oder vorteilhaft durch Sprühtrocknung.

Man erhält 245 Teile eines trockenen Produktes, das beim Vermahlen ein graues Pulver ergibt und das als Hauptbestandteil neben Natriumsulfat 126 Teile des Natriumsalzes der genannten Sulfatoverbindung enthält.

**(c)** Die unter (a) erhaltene kalte, verdünnte Lösung des Syntheseproduktes wird mit 200 Teilen eines Eis/Wasser-Gemisches verdünnt und bei einer Temperatur von 25° C oder darunter mit Calciumcarbonat auf einen pH-Wert zwischen 5 und 6 gestellt. Der Niederschlag an Calciumsulfat wird bei Raumtemperatur abfiltriert und mit 1000 Teilen Wasser von 70° C ausgewaschen. Das mit dem Waschwasser vereinigte Filtrat wird mit 27 Teilen Oxalsäure-dihydrat versetzt und mittels Natriumbicarbonat auf einen pH-Wert zwischen 5 und 6,5 eingestellt. Man fügt noch 20 Teile Kieselgur hinzu, rührt eine Stunde weiter, filtriert und wäscht den Rückstand mit 200 Teilen Wasser. Dieses mit dem Waschwasser vereinigte Filtrat wird wie unter (b) zur Trockene eingedampft.

Man erhält 130 Teile eines trockenen Produktes, das nach Vermahlen ein graues Pulver ergibt und das Natriumsalz des 2-Amino-1-hydroxy-4-(β-sulfatoäthylsulfonyl)-benzols nahezu frei von Salz-Verunreinigungen darstellt.

Die gemäß (a) erhaltene kalte, verdünnte Lösung oder die gemäß (b) oder (c) erhaltenen Schwefelsäureester bzw. deren Natriumsalze können vorteilhaft in an und für sich bekannter Weise zur Herstellung von faserreaktiven Verbindungen, insbesondere von faserreaktiven Azofarbstoffen oder deren Metallkomplexverbindungen oder von faserreaktiven Kupferformazanfarbstoffen verwendet werden.

**Beispiel 1b**

Zur Aufarbeitung des erfindungsgemäß hergestellten Schwefelsäureesters von Beispiel 1 verfährt man gemäß den Angaben des Abschnittes (b) von Beispiel 1a, setzt jedoch Natriumbicarbonat durch eine äquivalente Menge an Kaliumbicarbonat oder Kaliumcarbonat. Man erhält ein trockenes Produkt, das als Hauptbestandteil neben Kaliumsulfat das Kaliumsalz der genannten Sulfatoverbindung enthält.

**Beispiel 2**

In einem mit einem Rührer versehenen Reaktionsgefäß werden zu einer Mischung aus 139 Teilen 100 %-iger Schwefelsäure (Monohydrat) und 49,3 Teilen 65 %-igen Oleum innerhalb von 10 bis 15 Minuten unter Rühren 87 Teile 2-Amino-1-hydroxy-4-(β-hydroxyäthylsulfonyl)-benzol eingetragen, wobei man die Temperatur in der Reaktionsmischung von anfangs 0°C im Verlaufe des Eintragens allmählich so ansteigen läßt, daß sie zuletzt 50°C beträgt. Man rührt 4 Stunden bei 50°C nach; die Veresterung ist sodann beendet.

Die quantitative Analyse des Reaktionsgemisches mittels DC oder HPLC ergibt folgendes:

Der Gehalt an nicht umgesetztem 2-Amino-1-hydroxy-4-(β-hydroxyäthylsulfonyl)-benzol liegt unterhalb von 1 %, und der Anteil an sulfiertem Ester beträgt weniger als 1 Mol-%. Das Veresterungsgemisch enthält 116 - 118 Teile 2-Amino-1-hydroxy-4-(β-sulfatoäthylsulfonyl)-benzol entsprechend einem Veresterungsgrad von mehr als 97 % d.Th..

Der Reaktionsansatz kann gemäß den Beispielen 1 aufgearbeitet werden.

**Beispiel 3**

In einem mit einem Rührer versehenen Reaktionsgefäß werden in eine Mischung aus 100 Teilen 100 %-iger Schwefelsäure (Monohydrat) und 49,3 Teilen 65 %-igem Oleum unter Rühren innerhalb von 20 Minuten 87 Teile 2-Amino-1-hydroxy-4-(β-hydroxyäthylsulfonyl)-benzol eingetragen, wobei man die Temperatur in der Reaktionsmischung von anfangs 20°C im Verlaufe des Eintragens allmählich so ansteigen läßt, daß sie nach beendetem Eintragen etwa 70°C beträgt. Es wird noch 4 Stunden bei 60 bis 70°C nachgerührt; die Veresterung ist sodann beendet.

Die Analyse mittels DC oder HPLC ergibt, daß das Veresterungsgemisch 116 - 118 Teile 2-Amino-1-hydroxy-4-(β-sulfatoäthylsulfonyl)-benzol enthält. Der Anteil an unverändertem 2-Amino-1-hydroxy-4-(β-hydroxyäthylsulfonyl)-benzol liegt unterhalb 1 %, bezogen auf die eingesetzte Menge an diesem Ausgangsprodukt; der Anteil an sulfiertem Produkt liegt ebenso bei kleiner als 1 %. Der Veresterungsgrad ist größer als 97 % d.Th..

Der erhaltene Ansatz mit dem Veresterungsprodukt kann gemäß den Angaben der Beispiele 1 aufgearbeitet werden.

**Beispiel 4**

In einem Reaktionsgefäß mit Rührer werden in eine Mischung aus 42 Teilen 100 %-iger Schwefelsäure (Monohydrat) und 49,3 Teilen 65 %-igem Oleum innerhalb von 10 bis 15 Minuten unter Rühren 87 Teile 2-Amino-1-hydroxy-4-(β-hydroxyäthylsulfonyl)-benzol eingetragen, wobei man die Temperatur in der Reaktionsmischung von anfangs 20°C im Verlaufe des Eintragens allmählich so ansteigen läßt, daß sie nach beendetem Eintragen etwa 90°C beträgt. Es wird bei 90 bis 100°C noch 3 Stunden nachgerührt; die Veresterung ist sodann beendet.

Die Analyse ergibt einen Veresterungsgrad von über 97 % d.Th. mit 116 - 118 Teilen 2-Amino-1-hydroxy-4-(β-sulfatoäthylsulfonyl)-benzol im Veresterungsgemisch. Der Anteil an unverändertem 2-Amino-1-hydroxy-4-(β-hydroxyäthylsulfonyl)-benzol liegt unterhalb von 1,5 %, der Anteil an sulfiertem Produkt ebenfalls unterhalb 1,5 %, jeweils bezogen auf die eingesetzte Menge an diesem Ausgangsprodukt.

**Beispiel 5**

In einem Reaktionsgefäß mit Rührer werden in 139 Teile 100 %-ige Schwefelsäure (die durch Mischen von 32,7 Teilen 65 %-igem Oleum mit 106,3 Teilen einer (handelsüblichen) 95,5 %-igen Schwefelsäure hergestellt werden kann) 87 Teile 2-Amino-1-hydroxy-4-(β-hydroxyäthylsulfonyl)-benzol eingetragen, wobei man die Temperatur auf 50 - 60°C ansteigen läßt. Anschließend gibt man unter weiterem Rühren bei einer Temperatur von 50 - 70°C noch 49,3 Teile 65 %-iges Oleum langsam hinzu und rührt noch 4 Stunden bei 50°C weiter. Die

Veresterung ist sodann beendet.

Die Analyse ergibt ein Veresterungsgemisch mit einem Gehalt an 116 -118 Teilen 2-Amino-1-hydroxy-4-(β-sulfatoäthylsulfonyl)-benzol entsprechend einem Veresterungsgrad von größer als 97 % d.Th. und einem Anteil an unveränderten 2-Amino-1-hydroxy-4-(β-hydroxyäthylsulfonyl)-benzol und an sulfiertem Produkt von jeweils weniger als 1 %, bezogen auf die eingesetzte Menge dieses Ausgangsproduktes.

Das Veresterungsgemisch kann gemäß den Angaben der Beispiele 1 aufgearbeitet und als Alkalimetallsalze isoliert werden.

**Beispiel 6**

In einem mit Rührer versehenen Reaktionsgefäß werden zu 61 Teilen 100 %-iger Schwefelsäure unter Rühren innerhalb von 30 Minuten 87 Teilen 2-Amino-1-hydroxy-4-(β-hydroxyäthylsulfonyl)-benzol eingetragen, wobei man im Verlaufe des Eintragens gleichzeitig 49,3 Teile 65 %-iges Oleum langsam zugibt und die Temperatur allmählich bis 80° C ansteigen läßt. Anschließend rührt man noch 3 Stunden bei 80 - 90° C nach.

Die Analyse ergibt, daß das Veresterungsgemisch 116 - 118 Teile 2-Amino-1-hydroxy-4-(β-sulfatoäthylsulfonyl)-benzol entsprechend einem Veresterungsgrad von größer als 97 % d.Th. und unverändertes 2-Amino-1-hydroxy-4-(β-hydroxyäthylsulfonyl)-benzol sowie sulfiertes Produkt von jeweils weniger als 1 %, bezogen auf die eingesetzte Menge an der Ausgangsverbindung enthält.

**Beispiel 7**

Zur erfindungsgemäßen Herstellung der isomeren Verbindung 2-Amino-1-hydroxy-5-(β-sulfatoäthylsulfonyl)-benzol kann man gemäß einer der in den obigen Beispielen 1 bis 6 angegebenen Verfahrensweisen verfahren, setzt jedoch anstelle der 2-Amino-1-hydroxy-4-(β-hydroxyäthylsulfonyl)-benzol die gleiche Menge an 2-Amino-1-hydroxy-5-(β-hydroxyäthylsulfonyl)-benzol ein. Die Veresterung verläuft in identischer Weise mit gleich hohem Veresterungsgrad und mit den geringen Anteilen an Nebenprodukten, wie in diesen Beispielen 1 bis 6 für die isomere Verbindung angegeben. Das Veresterungsgemisch mit dem 2-Amino-1-hydroxy-5-(β-sulfatoäthylsulfonyl)-benzol kann gemäß den Verfahrensweisen der Beispiele 1a und 1b aufgearbeitet und in die Alkalimetallsalze übergeführt und isoliert werden.

**Beispiele 8 bis 13**

In den nachfolgenden Tabellenbeispielen 8 bis 13 sind weitere β-Sulfatoäthylsulfonyl-aminophenol-Verbindungen entsprechend der allgemeinen Formel (1) genannt (hierin bedeutet der Formelrest M Wasserstoff, Natrium oder Kalium), die in erfindungsgemäßer Weise aus den entsprechenden β-Hydroxyäthylsulfonyl-aminophenol-Verbindungen entsprechend der allgemeinen Formel (2) hergestellt werden können. Setzt man eine dieser Ausgangsverbindungen der Beispiele 8 bis 13 beispielsweise gemäß den Angaben der obigen Beispiele 1 bis 6 mit einem Schwefelsäure/Schwefeltrioxid-Gemisch um, erhält man die entsprechende Sulfatoverbindung ebenso mit einem Veresterungsgrad von größer als 97 % d.Th. und mit derselben hohen Reinheit, wie dort angegeben. Diese Veresterungsgemische können ebenfalls analog den Angaben der Beispiele 1a und 1b aufgearbeitet und isoliert werden. Sie können in bekannter Verfahrensweise zur Herstellung von faserreaktiven Farbstoffen, wie Azofarbstoffen oder deren Metallkomplexverbindungen, dienen, wobei die mit diesen erfindungsgemäß hergestellten Sulfatoverbindungen erhältlichen Endprodukte (Farbstoffe) sich durch einen sehr niedrigen Gehalt an nicht faserreaktivem Farbstoff und durch dementsprechende vorteilhafte Eigenschaften, wie beispielsweise hohe Farbausbeute beim Färben und Bedrucken von Cellulosefasermaterialien nach für faserreaktive Farbstoffe bekannten und üblichen Färbeverfahren, auszeichnen.

| Bsp. | Ausgangsverbindung (2) | Endprodukt (1) |
|---|---|---|
| 8 | 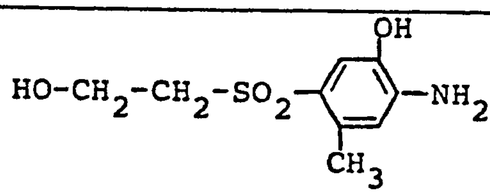 | 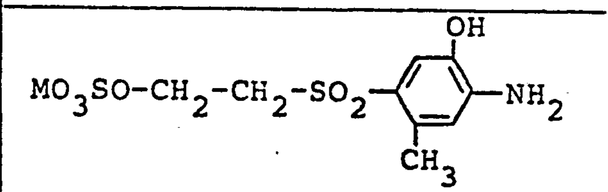 |
| 9 | 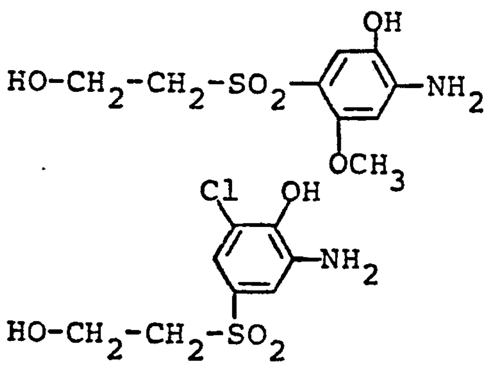 | 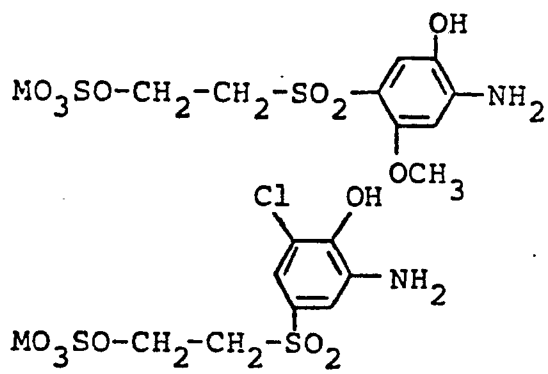 |
| 10 | | |
| 11 | 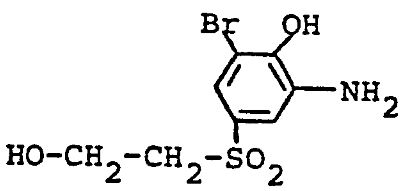 | 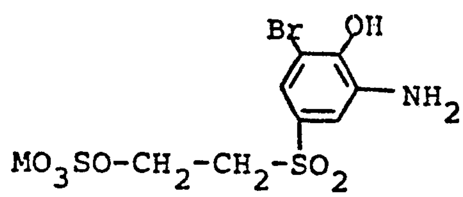 |
| 12 | 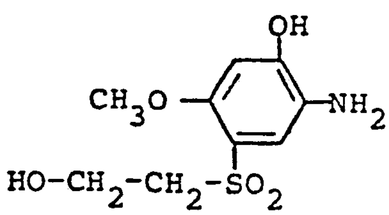 | 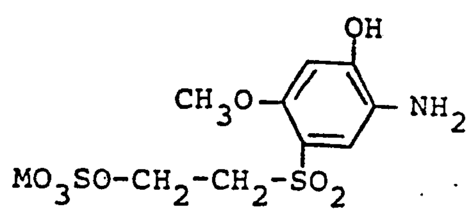 |
| 13 | 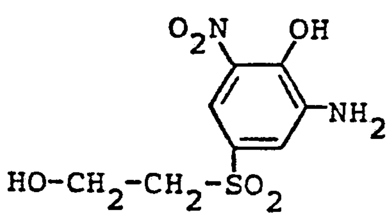 | 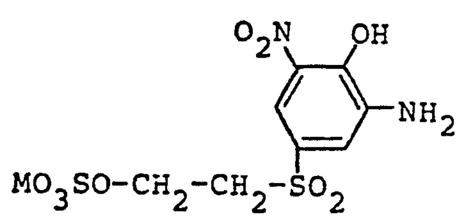 |

**Vergleichsbeispiel 1**

Durchführung der Sulfatierung gemäß Beispiel 1 der deutschen Patentschrift 953 103:
In einem mit Rührer versehenen Reaktiansgefäß wurden 110 Teile 2-Amino-1-hydroxy-4-(β-

hydroxyäthylsulfonyl)-benzol in 325 Teile 90 %-ige wäßrige Schwefelsäure bei einer Temperatur von 30 - 35° C eingetragen. Bis zur vollständigen Lösung wurde der Reaktionsansatz noch 6 Stunden weitergerührt.

Die Analyse durch DC und HPLC ergab einen Veresterungsgrad von 80 % d.Th. und einen Gehalt an unverändertem (nich umgesetztem) 2-Amino-1-hydroxy-4-(β-hydroxyäthylsulfonyl)-benzol von 20 % der eingesetzten Ausgangsverbindung. Rührt man das Reaktionsgemisch noch 24 Stunden weiter, so wird ein unverändert gleiches Ergebnis erhalten.

**Vergleichsbeispiel 2**

Sulfatierung gemäß dem Beispiel 6 der U.S. Patentschrift Nr. 3 135 730:

In einem Reaktionsgefäß mit Rührer wurden bei 30° C 109 Teile 2-Amino-1-hydroxy-4-(β-hydroxyäthylsulfonyl)-benzol in 335 Teile konzentrierter (95,5 %-iger) Schwefelsäure eingetragen. Der Ansatz wurde bei dieser Temperatur weitergerührt.

Sowohl nach 6 als auch nach 24 Stunden zeigte die Analyse durch DC und HPLC einen Veresterungsgrad von 90 % d.Th. mit einem Restgehalt von 10 % der eingesetzten Ausgangsverbindung.

**Vergleichsbeispiel 3**

Sulfatierung gemäß dem Beispiel 1b der U.S. Patentschrift Nr. 3 364 194:

In einem mit Rührer versehenen Reaktionsgefäß wurden 109 Teile 2-Amino-1-hydroxy-4-(β-hydroxyäthylsulfonyl)-benzol in 180 Volumenteile (entsprechend 332 Teile) konzentrierte (95,5 %-ige) Schwefelsäure bei einer Temperatur von 70 - 80° C eingetragen. Es wurde anschließend noch 30 Minuten bei 70 - 80° C nachgerührt; danach war das Produkt vollständig in Lösung gegangen.

Die Analyse gemäß DC und HPLC ergab, daß das Reaktionsmisch noch 10 % des eingesetzten 2-Amino-1-hydroxy-4-(β-hydroxyäthylsulfonyl)-benzols enthielt.

**Vergleichsbeispiel 4**

Es wurde gemäß der Verfahrensweise des Vergleichsbeispieles 2 verfahren, jedoch anstelle der dort angegebenen 335 Teile konzentrierter Schwefelsäure lediglich 257 Teile konzentrierte Schwefelsäure eingesetzt. Nach einer Reaktionszeit von 6 Stunden und ebenso nach einer Reaktionszeit von 24 Stunden zeigte die Analyse noch einen Gehalt an der verwendeten β-Hydroxyäthylsulfonyl-Ausgangsverbindung von 13 %.

**Vergleichsbeispiel 5**

Es wurde gemäß der Verfahrensweise des Vergleichsbeispieles 2 verfahren, jedoch wurden anstelle der dort angegebenen 335 Teile konzentrierter Schwefelsäure nur 205 Teile konzentrierte Schwefelsäure verwendet. Nach einer Reaktionszeit von 6 und ebenso von 24 Stunden zeigte die Analyse, daß das Reaktionsgemisch noch 15 % der eingesetzten β-Hydroxyäthylsulfonyl-Ausgangsverbindung enthielt.

**Anwendungsbeispiel 1**

Eine gemäß Beispiel 1a, Abschnitt (a), hergestellte kalte, verdünnte Lösung des Veresterungsproduktes mit 118 Teilen 2-Amino-1-hydroxy-4-(β-sulfatoäthylsulfonyl)-benzol wird durch Zugabe einer wäßrigen Lösung von 28 Teilen Natriumnitrit unter Rühren bei 0 bis 10° C diazotiert. Anschließend wird ein geringer Nitritüberschuß mit wenig Amidosulfonsäure zerstört. Zur Herstellung einer Azoverbindung werden 102 Teile 1-(4'-Sulfophenyl)-3-methyl-pyrazolon(5) zugegeben, der pH-Wert mittels Natriumcarbonat auf 5,5 bis 6,5 gestellt und die Kupplungsreaktion bei Einhaltung dieses pH-Bereiches zu Ende geführt. Anschließend werden 100 Teile Kupfersulfat-pentahydrat zugegeben, der pH-Wert mittels 20 Teilen kristallisiertem Natriumacetat und weiterhin mittels Natriumcarbonat auf 5 bis 5,5 eingestellt. Man rührt 3 Stunden bei Raumtemperatur weiter, klärt den Syntheseansatz unter Zusatz von Kieselgur und durch Filtration und isoliert den hergestellten Kupferkomplex-Azofarbstoff der Formel

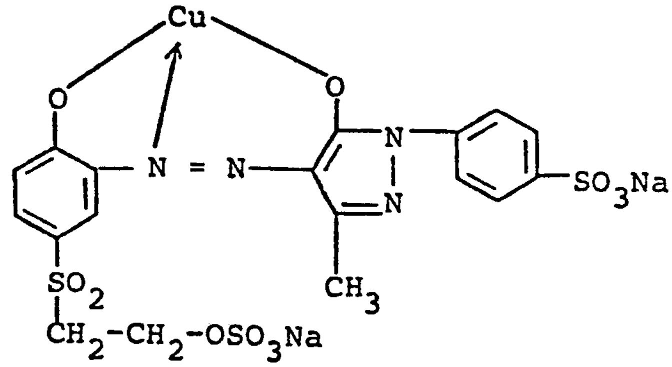

durch Eindampfen der Farbstofflösung bei 50 bis 60°C im Umluftschrank oder im Vakuumschrank oder durch Sprühtrocknung. Der Rückstand wird gemahlen; er ergibt ein gelbbraunes Farbstoffpulver, das beim Färben oder Bedrucken vom Baumwolle oder anderem Cellulosefasermaterial nach den für faserreaktive Farbstoffe bekannten und üblichen Druck- und Färbemethoden farbstarke, gelbe Färbungen und Drucke von sehr guten Licht- und Naßechtheiten liefert. Das erhaltene Farbstoffpulver zeichnet sich insbesondere dadurch aus, daß es nur einen geringen Anteil an nicht faserreaktivem Farbstoff enthält.

**Anwendungsbeispiel 2**

Eine gemäß Beispiel 1a, Abschnitt (a), hergestellte kalte, verdünnte Reaktionslösung mit 118 Teilen 2-Amino-1-hydroxy-4-(β-Sulfatoäthylsulfonyl)-benzol wird durch Zugabe einer wäßrigen Lösung von 28 Teilen Natriumnitrit unter Rühren bei 0 bis 10°C diazotiert. Ein geringer Überschuß an Nitrit wird anschließend mit Amidosulfonsäure zerstört. Zu dieser Lösung des Diazoniumsalzes gibt man die neutrale wäßrige Lösung eines Monoazofarbstoffes aus 2-Aminonaphthalin-4,8-disulfonsäure als Diazokomponente und 1,3-Dihydroxy-benzol als Kupplungskomponente (Die Lösung des Monoazofarbstoffes kann wie folgt hergestellt werden: 121 Teile 2-Aminonaphthalin-4,8-disulfonsäure werden in 1000 Teilen Eis und Wasser unter Zusatz von 80 Teilen einer 30 %-igen wäßrigen Salzsäure bei 0 bis 10°C mit einer wäßrigen Lösung von 28 Teilen Natriumnitrit diazotiert. Ein geringer Nitritüberschuß wird anschließend wie üblich mit Amidosulfonsäure zerstört. Man gibt sodann 44 Teile 1,3-Dihydroxybenzol hinzu und rührt bis zur Beendigung der Kupplung weiter, sodann stellt man den Ansatz mittels 33 %-iger wäßriger Natronlauge auf einen pH-Wert zwischen 6 und 7 ein).

Die Kupplungsreaktion der Monoazoverbindung mit dem Diazoniumsalz der erfindungsgemäß hergestellten Sulfatoverbindung erfolgt bei Raumtemperatur und einem pH-Wert von 6 bis 6,5, der durch Einstreuen von Calciumcarbonat eingestellt wird. Man rührt die Reaktionsmischung bis zur Beendigung der Kupplungsreaktion weiter. Sodann gibt man zur Herstellung eines Kupferkomplex-Disazofarbstoffes 100 Teile Kupfersulfat-pentahydrat hinzu, stellt den pH-Wert mittels Calciumcarbonat auf 5 bis 5,5 ein, erwärmt die Reaktionsmischung auf 40 - 50°C, rührt eine Stunde bei dieser Temperatur weiter und filtriert anschließend das gebildete Calciumsulfat ab, das mit Wasser von 70°C ausgewaschen wird. Das vereinigte Waschwasser und Filtrat wird mit 30 Teilen Oxalsäure-dihydrat versetzt, sodann mit Natriumcarbonat auf einen pH-Wert zwischen 5 und 5,5 eingestellt, nach Zusatz von 20 Teilen Kieselgur 2 Stunden lang gerührt und anschließend filtriert.

Der so hergestellte 1:1-Kupferkomplex-Disazofarbstoff wird entweder durch Aussalzen mit Natriumchlorid und/oder Kaliumchlorid und Filtration oder aber durch Sprühtrocknung isoliert. Wegen des geringen Gehaltes an anorganischen Salzen kann die Farbstofflösung jedoch auch ohne Isolierung des Farbstoffes direkt, gegebenenfalls nach Konzentrieren durch Eindampfen der Lösung auf ein geringeres Volumen, zum Färben oder Bedrucken von Cellulosefasermaterial nach für faserreaktive Farbstoffe üblichen Druck- und Färbeverfahren eingesetzt werden. Dieser 1:1-Kupferkomplex-Disazofarbstoff, der aus dem erfindungsgemäß hergestellten 2-Amino-1-hydroxy-4-(β-sulfatoäthylsulfonyl)-benzol als Ausgangsverbindung synthetisiert wurde, liefert sowohl nach der Isolierung als trockenes Pulver als auch unter Anwendung in konzentrierter Lösung auf Cellulosefasermaterialien nach den für faserreaktive Farbstoffe üblichen Druck- und Färbeverfahren infolge seines geringen Anteiles an nicht faserreaktivem Farbstoff rotstichig braune Färbungen und Drucke von sehr guten Licht- und Naßechtheiten, die farbstärker sind als diejenigen Färbungen und Drucke, die mit dem Produkt eines solchen Farbstoffes hergestellt wurde, für das eine Ausgangssulfatoverbindung diente, die nach einem Verfahren des Standes der Technik verestert wurde.

**Patentansprüche**

1. Verfahren zur Herstellung von β-Sulfatoäthylsulfonylaminophenol-Verbindungen der allgemeinen Formel (1) durch Umsetzun6 von β-Hydroxyäthylsulfonyl-aminophenol-Verbindungen der allgemeinen Formel (2)

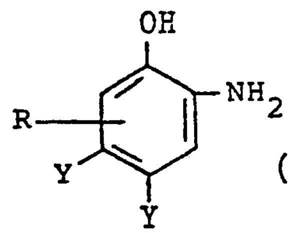
(1)

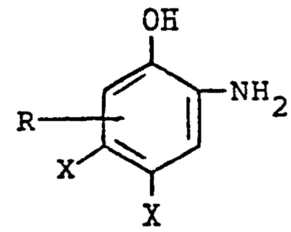
(2)

in welchen das eine Y die β-Sulfatoäthylsulfonyl-Gruppe der Formel $-SO_2-CH_2-CH_2-OSO_3H$ und das andere Y ein Wasserstoffatom darstellt, das eine X eine β-Hydroxyäthylsulfonyl-Gruppe der Formel $-SO_2-CH_2-CH_2-OH$ und das andere X ein Wasserstoffatom bedeutet sowie R für ein Wasserstoffatom oder eine Alkylgruppe von 1 bis 4 C-Atomen oder eine Alkoxygruppe von 1 bis 4 C-Atomen, ein Chloratom, ein Bromatom oder die Nitrogruppe steht, mit einem Schwefelsäure/Schwefeltrioxid-Gemisch als Sulfatierungsmittel, dadurch gekennzeichnet, daß man die Sulfatierung unter Verwendung eines Sulfatierungsgemisches, das anteilig aus der 1,5-fach bis 4-fach molaren Menge an 100 %-iger Schwefelsäure und der 0,9-fach bis 1,1-fach molaren Menge an Schwefeltrioxid, bezogen auf Mol Ausgangsverbindung (2), besteht, und ohne ein weiteres Lösemittel durchführt und daß die Umsetzung in gewöhnlichen Rührgefäßen bei einer Temperatur zwischen 0° C und 120° C erfolgt und daß man hierbei innerhalb dieses Temperaturbereiches die Temperatur so hoch hält, daß das Reaktionsgemisch ausreichend dünnflüssig und rührfähig bleibt.

2. Verfahren nach Anspruch 1, dadurch gekennzeichnet, daß man ein Sulfatierungsgemisch verwendet, dessen anteilige Menge an 100 %-iger Schwefelsäure die 2-fach bis 3-fach molare Menge, bezogen auf Ausgangsverbindung (2), ist.

3. Verfahren nach Anspruch 1 oder 2, dadurch gekennzeichnet, daß die anteilige Menge an Schwefeltrioxid die 0,95-fach bis 1,1-fach molare Menge, bezogen auf Ausgangsverbindung (2), ist.

4. Verfahren nach Anspruch 1, 2 oder 3, dadurch gekennzeichnet, daß die Umsetzung bei einer Temperatur zwischen 40 und 100° C durchgeführt wird.

5. Verwendung der nach einem Verfahren nach Anspruch 1, 2, 3 oder 4 hergestellten Verbindungen der allgemeinen Formel (1), vorzugsweise in Form des Veresterungsansatzes, zur Synthese von faserreaktiven Verbindungen, vorzugsweise Farbstoffen.

## Claims

1. A process for the preparation of a β-sulfatoethylsulfonyl-aminophenol compound of the general formula (1) by reacting β-hydroxyethylsulfonyl-aminophenol compound of the general formula (2)

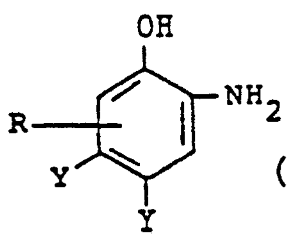
(1)

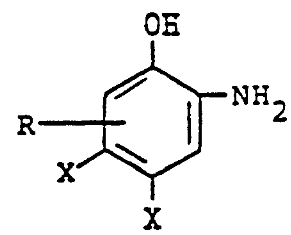
(2)

in which one radical Y represents the β-sulfatoethylsulfonyl group of the formula $-SO_2-CH_2-CH_2-OSO_3H$ and the other radical Y represents a hydrogen atom, one radical X represents a β-hydroxyethylsulfonyl group of the formula $-SO_2-CH_2-CH_2-OH$ and the other radical X represents a hydrogen atom, and R represents a hydrogen atom, an alkyl group having 1 to 4 carbon atoms, an alkoxy group having 1 to 4 carbon atoms, a chlorine atom, a bromine atom or the nitro group, with a sulfuric acid/sulfur trioxide mixture as the sulfating agent, charaterized in that carrying out the sulfation using a sulfating mixture which consists of 1.5 times to 4 times the molar amount of 100 % strength sulfuric acid and 0.9 times to 1.1 times the molar amount of sulfur trioxide, based on the moles of starting compound (2), without a further solvent, in the usual stirred vessels, at a temperature between 0°C and 120°C, and keeping the temperature high enough, within this temperature range, for the reaction mixture to remain sufficiently mobile and hence stirrable.

2. The process as claimed in claim 1, wherein a sulfating mixture is used the content of 100 % sulfuric acid of which is 2 times to 3 times the molar amount of 100 % strength sulfuric acid, based on the starting compound (2).

3. The process as claimed in either of claims 1 and 2, wherein the content of sulfur trioxide is 0.95 time to 1.1 times the molar amount, based on the starting compound (2).

4. The process as claimed in any one of claims 1, 2 and 3, wherein the reaction is carried out at a temperature of between 40 and 100° C.

5. The use of a compound of the formula (1) prepared by a process as claimed in any one of claims 1, 2, 3 and 4, preferably in the form of the esterification mixture, for the synthesis of a fiber-reactive compound, preferably a dyestuff.

**Revendications**

1. Procédé de préparation de (sulfato-2 éthylsulfonyl)-amino-phénols de formule générale (1) par réaction d'(hydroxy-2 éthylsulfonyl)-amino-phénols de formule générale (2):

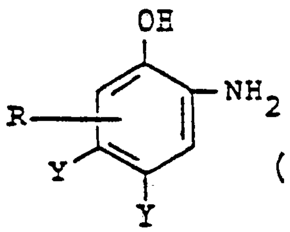
(1)

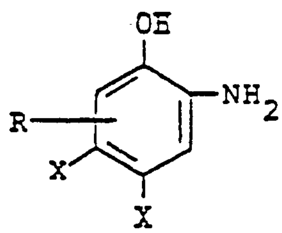
(2)

dans lesquelles l'un des symboles Y représente un radical sulfato-2 éthylsulfonyle, c'est-à-dire $-SO_2-CH_2-CH_2-OSO_3H$, et l'autre un atome d'hydrogène, l'un des symboles X représente un radical hydroxy-2 éthylsulfonyle, c'est-à-dire $-SO_2-CH_2-CH_2-OH$, et l'autre un atome d'hydrogène, et R représente un atome d'hydrogène, un alkyle contenant de 1 à 4 atomes de carbone, un alcoxy contenant de 1 à 4 atomes de carbone, un atome de chlore, un atome de brome ou un radical nitro, avec un mélange d'acide sulfurique et de trioxyde de soufre comme agent de sulfatation, procédé caractérisé en ce qu'on effectue la sulfatation en utilisant un mélange de sulfatation qui est constitué, proportionellement, de 1,5 à 4 fois la quantité molaire d'acide sulfurique à 100 % et de 0,9 à 1,1 fois la quantité molaire de trioxyde de soufre, pour 1 mol du corps de départ (2), et sans autre solvant, en ce qu'on opère, pour exécuter la réaction, dans des récipients à agitateur usuels, à une températurre comprise entre 0 et 120° C, et en ce qu'on veille à ce que la température, dans cet intervalle, soit alors suffisamment élevée pour que le mélange réactionnel reste suffisamment fluide et agitable.

2. Procédé selon la revendication 1, caractérisé en ce qu'on utilise un mélange de sulfatation dont la proportion d'acide sulfurique à 100 % représente de 2 à 3 fois la quantité molaire par rapport au corps de départ (2).

3. Procédé selon l'une des revendications 1 et 2, caractérisé en ce que la proportion du trioxyde de soufre représente de 0,95 à 1,1 fois la quantité molaire par rapport au corps de départ (2).

4. Procédé selon l'une quelconque des revendications 1 à 3, caractérisé en ce que la réaction est effectuée à une température comprise entre 40 et 100° C.

5. Application des composés de formule générale (1) qui ont été préparés par un procédé selon l'une quelconque des revendications 1 à 4, de préférence sous la forme du mélange d'estérification, pour la synthèse de composés capables de réagir avec des fibres, de préférence puor la synthèse de colorants réactifs.